# EUROPEAN PATENT SPECIFICATION

(11) **EP 4 535 077 B1**
(45) Date of publication and mention of the grant of the patent: **28.10.2026**
(21) Application number: 22944945.9
(22) Date of filing: 03.06.2022
(51) Int. Cl.: G02F 3/00, G02F 1/21, H04B 10/516, H04Q 11/00, G06N 3/067, G06N 3/044

(54) **OPTICAL COMPUTATION DEVICE AND OPTICAL COMPUTATION METHOD**
OPTISCHE BERECHNUNGSVORRICHTUNG UND OPTISCHES BERECHNUNGSVERFAHREN
DISPOSITIF DE CALCUL OPTIQUE ET PROCÉDÉ DE CALCUL OPTIQUE

(43) Date of publication of application: 09.04.2025
(73) Proprietor: NTT, Inc., Tokyo 100-8116 (JP)
(72) Inventor: TAKAHASHI, Junko, Musashino-shi, Tokyo 180-8585 (JP); CHIDA, Koji, Musashino-shi, Tokyo 180-8585 (JP); KITA, Shota, Musashino-shi, Tokyo 180-8585 (JP); SHINYA, Akihiko, Musashino-shi, Tokyo 180-8585 (JP)
(74) Representative: Murgitroyd & Company
(86) International application number: PCT/JP2022/022688
(87) International publication number: WO 2023/233668

(56) References cited:
- JP-A- 2018 036 455
- JP-A- 2019 523 932
- JP-A- 2021 135 463
- JP-A- 2022 062 479
- US-A1- 2015 354 938
- TAKAHASHI JUNKO ET AL: "Cryptographic Circuit Technology Consisting of Optical Logic Gates", 1 January 2022 (2022-01-01), pages 40 - 46, XP093346577, ISSN: 2436-5327, Retrieved from the Internet <URL:https://ntt-review.jp/archive/ntttechnical.php?contents=ntr202201fa7.pdf&mode=show_pdf> DOI: 10.53829/ntr202201fa7
- SRIVASTAVA VIVEK KUMAR, PAL AMRINDRA, SHARMA SANDEEP: "Design of Hamming Code Checker Using Titanium-Diffused Lithium Niobate-Based Waveguide", FIBER AND INTEGRATED OPTICS., TAYLOR & FRANCIS, LONDON., GB, vol. 38, no. 4, 4 July 2019 (2019-07-04), GB , pages 218 - 235, XP093116971, ISSN: 0146-8030, DOI: 10.1080/01468030.2019.1621962

## Description

### Technical Field

The present invention relates to a data computing method used in optical communication, an optical computing base, and the like.

### Background Art

In the related art, an optical computing circuit using an optical computing element has been proposed (for example, Non Patent Literature 1). In the related art, an optical circuit is realized by using a Ψ gate and a Y gate which are optical computing elements and a Mach-Zehnder interference type optical switch (MZI optical switch). Non Patent Literature 1 proposes a computing method using an MZI optical switch for a non-linear computation part of an encryption scheme and using a Y gate for a linear computation part.

In the conventional computing method, a bit of an optical signal expresses "0" or "1" according to a magnitude of an amplitude of light (or an intensity of the light (the square of the amplitude of the light)) or a phase of the light. For example, a case where a phase difference between two optical signals is 0 is expressed as bit 0, and a case where the phase difference is π is expressed as bit 1.

### Citation List

### Non Patent Literature

Non Patent Literature 1: Cipher circuit technology using optical logic gate, Junko TAKAHASHI, Koji CHIDA, Kimihiro YAMAKOSHI, Shota KITA, Akihiko SHINYA, NTT Technical Journal 2021.11, pp. 59-63.

### Summary of Invention

### Technical Problem

In the computing method according to related art, in particular, since a plurality of optical logic gates are connected when performing multi-bit computation, an optical loss is large, and it is necessary to frequently perform conversion (photoelectric conversion) from an optical signal to an electrical signal in the middle of computation in order to obtain a correct computation result.

In computation using a Ψ gate or a Y gate (an optical gate excluding bias light of the Ψ gate), it is necessary to frequently perform the photoelectric conversion in the middle of the computation in order to change a phase difference of an input optical signal according to a computation result when the computation result is used for an input of the next computation. Performing photoelectric conversion in the middle of computation leads to a computation delay and an increase in power consumption.

In particular, it is difficult to perform an operation connected in multiple stages of non-linear computation (for example, exclusive OR (XOR)) by using an optical logic gate, and it is necessary to perform threshold processing using an electric circuit at the end of the computation in order to obtain a correct computation result (Non Patent Literature 1).

The present invention has been made in view of the above circumstances, and an object of the present invention is to provide a technique for reducing a photoelectric conversion process in optical computation.

### Solution to Problem

According to the disclosed technique, there is provided an optical computing apparatus including: an address conversion unit configured to convert a plurality of bit values into an address value used as an input port number; and a port conversion unit including a shuffle circuit configured to output light input from an input port with the input port number, from an output port with an output port number corresponding to a result of a computation of the input port number.

### Advantageous Effects of Invention

According to the disclosed technique, it is possible to reduce the photoelectric conversion processing in optical computation.

### Brief Description of Drawings

[Fig. 1] Fig. 1 is a diagram illustrating a basic configuration of an optical computing apparatus 100.
[Fig. 2] Fig. 2 is a diagram for describing a code bit computing method.
[Fig. 3] Fig. 3 is a diagram illustrating a configuration example of an optical computing apparatus 100 in Example 1-1-1.
[Fig. 4] Fig. 4 is a diagram illustrating a configuration example of an MZI optical switch.
[Fig. 5] Fig. 5 is a diagram for describing an operation of the MZI optical switch.
[Fig. 6] Fig. 6 is a diagram illustrating a configuration example of an optical computing apparatus 100 in Example 1-1-2.
[Fig. 7] Fig. 7 is a diagram illustrating a configuration example of the optical computing apparatus 100 in Example 1-1-2.
[Fig. 8] Fig. 8 is a diagram illustrating a configuration example of the optical computing apparatus 100 in Example 1-1-2.
[Fig. 9] Fig. 9 is a diagram for describing an error detection method.
[Fig. 10] Fig. 10 is a diagram illustrating a configuration example of an optical computing apparatus 100 in Example 1-2.
[Fig. 11] Fig. 11 is a diagram illustrating a configuration example of an optical computing apparatus 100 in Example 2-1-1.
[Fig. 12] Fig. 12 is a diagram illustrating a configuration example of an optical computing apparatus 100 in Example 2-1-2.
[Fig. 13] Fig. 13 is a diagram for describing MixColumns computing.
[Fig. 14] Fig. 14 is a diagram illustrating a configuration example of an optical computing apparatus 100 in Example 2-2.
[Fig. 15] Fig. 15 is a diagram illustrating a configuration example of a 2-multiplication circuit 123 (shuffle circuit 121).
[Fig. 16] Fig. 16 is a diagram illustrating a configuration example of a bit decomposition circuit 122.
[Fig. 17] Fig. 17 is a diagram illustrating a configuration example of a multi-bit XOR computing circuit 130.
[Fig. 18] Fig. 18 is a diagram illustrating a configuration example of an address conversion unit 110.

### Description of Embodiments

Embodiments of the present invention (present embodiments) will be described below with reference to the drawings. Each of the embodiments described below is merely an example, and embodiments to which the present invention is applied are not limited to the following embodiments.

### (Basic configuration of optical computing apparatus)

In the technique according to the present embodiment, in an optical computing apparatus 100, by expressing a plurality of bits with a port number of light, computation based on optical wiring is performed, and construction of any function or any computation is enabled. As a result, the number of optical logic gates used for computation can be reduced, and the number of times of photoelectric conversion can be reduced.

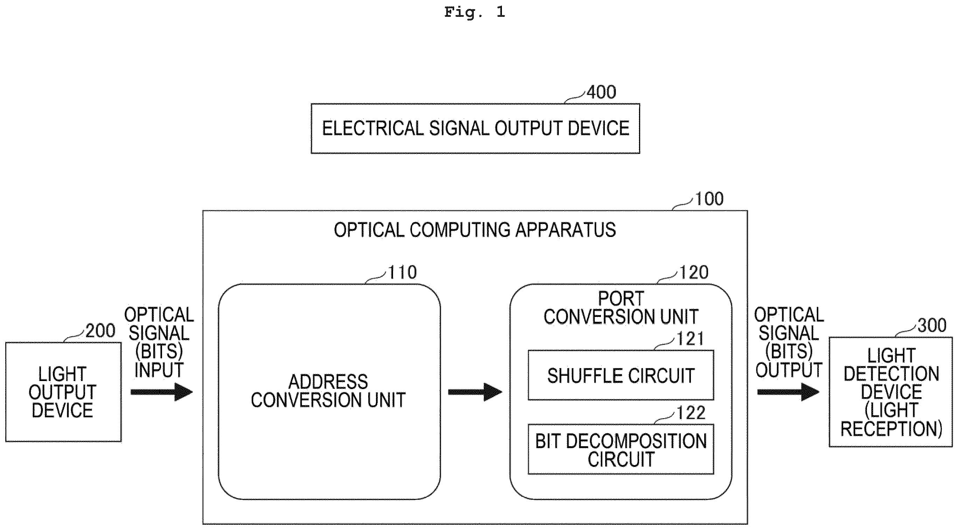

Fig. 1 illustrates a basic configuration of the optical computing apparatus 100 according to the present embodiment. The optical computing apparatus 100 receives an optical signal output from a light output device 200, performs optical computation, and outputs the optical signal to a light detection device 300. In the case of using the optical computing apparatus 100 of a type that performs path control by using an electrical signal, an electrical signal output device 400 that outputs an electrical signal is also used.

As illustrated in Fig. 1, the optical computing apparatus 100 includes an address conversion unit 110 and a port conversion unit 120. The address conversion unit 110 converts a bit value (optical bit signal) expressed by an optical signal (or electrical signal) into a corresponding address value. The port conversion unit 120 performs computation as port conversion of an optical signal.

For example, the address conversion unit 110 converts bit values (0, 1, 0) into an address value "010", and an optical signal is input to a position (port number) of an input port in the port conversion unit 120 corresponding to the address value.

The port conversion unit 120 includes a shuffle circuit 121 and a bit decomposition circuit 122. The shuffle circuit 121 includes both a plurality of input ports to which optical signals are input and a plurality of output ports that output optical signals. The input ports and the output ports are connected according to a predetermined rule. A connection method may be a waveguide, an optical fiber, or other methods.

A port number is assigned to each of the input ports and the output ports, and outputting an optical signal input to an input port with a certain port number (referred to as a "port number A") from an output port with a certain port number (referred to as a "port number B") indicates that conversion (computation) from the port number A to the port number B is performed.

The input ports and the output ports are connected according to a predetermined rule so that conversion of a port number corresponds to desired computation.

The bit decomposition circuit 122 performs a process (decomposition into bits) for returning the port number of the output port, from which the optical signal is output, to a bit value in the shuffle circuit 121.

As described above, by temporarily converting the bit value represented by the optical signal into the address value, the subsequent computation can be performed by using only an optical wiring. With the technique according to the present embodiment, it is possible to perform any computation of an N-bit input and an M-bit output based on the optical wiring (where N and M are any integers). Hereinafter, more specific examples of a configuration and an operation of the optical computing apparatus 100 will be described in Example 1 and Example 2.

### (Example 1: error correction computing method)

First, Example 1 will be described. In Example 1, the optical computing apparatus 100 performs computation for an error correction process.

In the error correction process, generally, a code bit is generated on the transmitting side of an information bit, and the information bit and the code bit are transmitted, and the error correction process is performed on the receiving side by using the received information bit and code bit.

Here, an example will be described in which the information bits (the number of bits of information transmitted and received between a transmitter and a receiver) are 4 bits, and code bits used for 1-bit error detection are 3 bits. However, this is an example, and a similar computing method can be applied to any number of bits. Note that, in the error correction process described below, a 1-bit computation error can be detected, but application of the technique according to the present embodiment does not depend on the number of error bits.

Hereinafter, computation for generating a code bit will be described as Example 1-1, and computation for error detection will be described as Example 1-2.

### (Example 1-1: generation of code bit)

In a case where the optical computing apparatus 100 that generates a code bit from an information bit is configured, a value of the code bit corresponding to a bit value of the information bit is computed in advance. Here, code bits (3 bits) of the Hamming code of information bits (4 bits) are computed in advance.

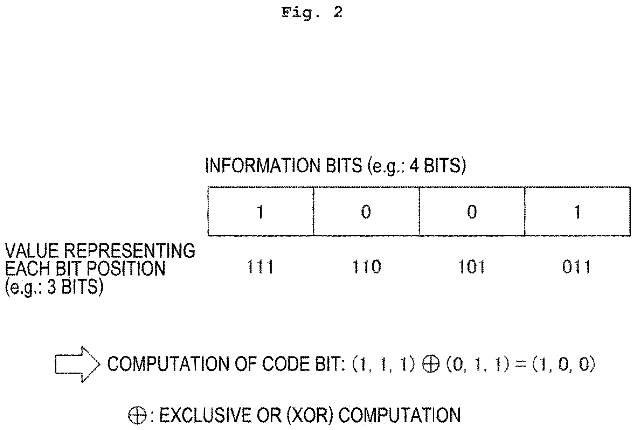

As a method of calculating a code bit, for example, a method disclosed in Reference Literature "The second basic course of error detection and correction to capture the broad frame of Hamming codes, Embedded Technology Lab., published on September 23, 2020" can be used. An example of the method is illustrated in Fig. 2. As illustrated in Fig. 2, each bit of the information bits (4 bits) is represented by 3 bits corresponding to the position, and exclusive OR (XOR) computation is performed between the 3 bits corresponding to 1 of the information bits, whereby a code bit corresponding to the information bit can be obtained.

In the shuffle circuit 121, each value of the information bits is allocated to the port number of the input port, each value of the code bits is allocated to the port number of the output port, and the input port and the output port are connected such that a code bit corresponding to the information bit is obtained.

Hereinafter, a configuration example of the optical computing apparatus 100 for generating a code bit corresponding to any information bit will be described. Hereinafter, Example 1-1-1 and Example 1-1-2 will be described.

### <Example 1-1-1: example of using MZI optical switch for address conversion>

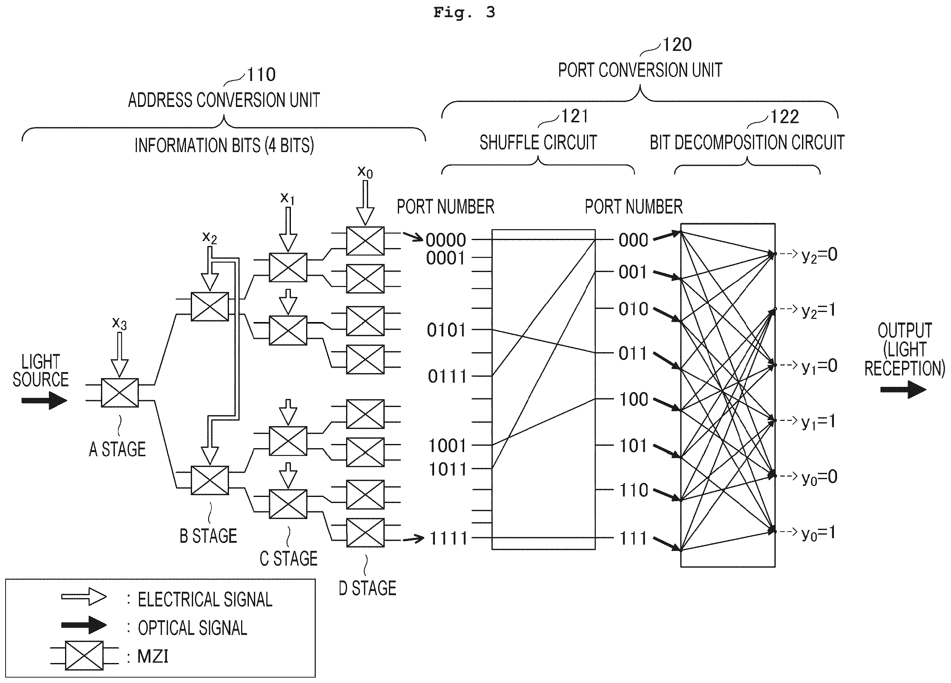

Fig. 3 illustrates a configuration example of an optical computing apparatus 100 in Example 1-1-1. As illustrated in Fig. 3, the optical computing apparatus 100 includes an address conversion unit 110 and a port conversion unit 120. The port conversion unit 120 includes a shuffle circuit 121 and a bit decomposition circuit 122.

The address conversion unit 110 has a configuration, in which a plurality of stages, in which one or a plurality of MZI optical switches are arranged in parallel, are connected in series.

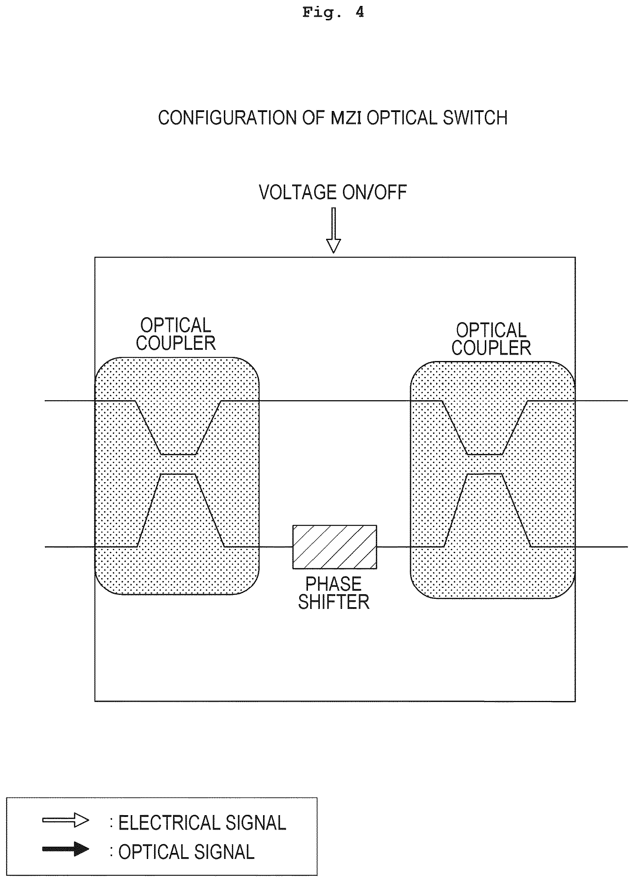

Fig. 4 illustrates a configuration example of the MZI optical switch. The MZI optical switch is a type of optical logic gate, and includes two optical couplers and an arm in which a phase shifter is embedded on one side or both sides. In the example in Fig. 4, the phase shifter is embedded in the lower path.

The MZI optical switch operates as a switch that changes a refractive index of an optical waveguide depending on whether or not a voltage is applied to the path in which the phase shifter is embedded, thereby changing a phase difference between the two paths to switch paths of light.

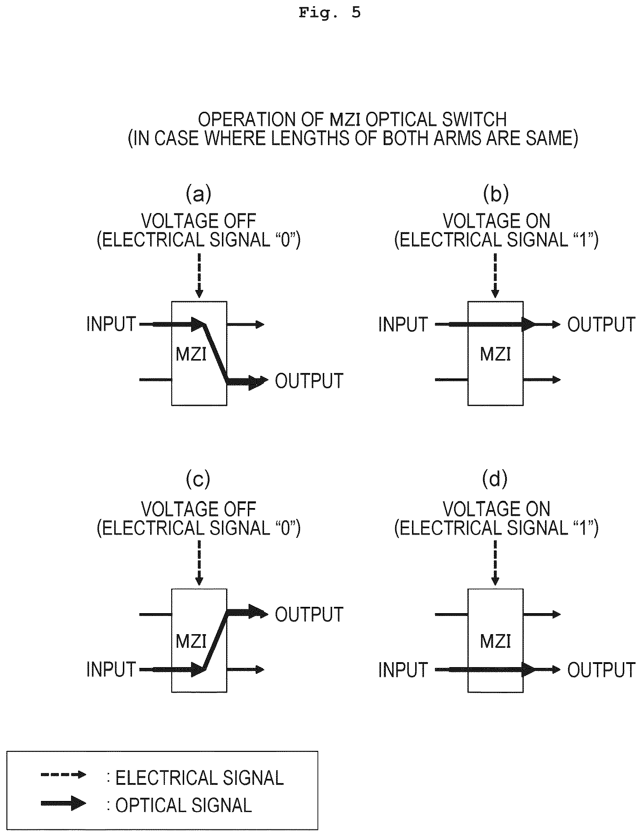

For example, as illustrated in Fig. 5(b), in a case where light is input to the upper path and a voltage is applied to the path in which the phase shifter is embedded (corresponding to a bit "1" of an electrical signal), an optical signal is output from a straight path (upper side). As illustrated in (a), in a case where no voltage is applied (corresponding to a bit "0" of an electrical signal), an optical signal is output from a crossed path (lower side). As illustrated in (c) and (d), the same applies to a case where light is input to the lower path.

As described above, in the MZI optical switch, it is possible to switch paths of an optical signal by turning on and off a voltage. Here, as an example, a case where the phase shifter is on the lower side of the arm will be described.

In the address conversion unit 110 illustrated in Fig. 3, x₃ corresponds to the A stage, x₂ corresponds to the B stage, x₁ corresponds to the C stage, and x₀ corresponds to the D stage in information bits ((x₃, x₂, x₁, x₀): x₀ is the least significant bit). In the D stage, the number of paths (ports) that can output optical signals is 2⁴.

In the example illustrated in Fig. 3, in each of the A to C stages, the arm (path) on the output side of each MZI optical switch is connected to the arm on the lower side on the input side of the MZI optical switch of the next stage. However, this is an example. The arm on the output side of the MZI optical switch may be connected to the upper arm on the input side of the next stage MZI optical switch.

In the address conversion unit 110 in Fig. 3, paths of light emitted from a light source (light output device 200) are switched depending on the information bits (4 bits), and the light arrives at the input of the port conversion unit 120.

For example, in the example in Fig. 3, when the information bits are (0, 0, 0, 0), light passes through the arm of each uppermost MZI optical switch, and the light arrives at a port with the port number 0000 in the port conversion unit 120 (specifically, the shuffle circuit 121). In other words, the port number of the port at which light arrives when the information bits are (0, 0, 0, 0) is set to 0000. Alternatively, when the information bits are (0, 0, 0, 0), the connection of the address conversion unit 110 may be set such that light arrives at the input port of the port number 0000.

Similarly, when the information bits are (0, 0, 0, 1), light is output from the second port from the top among the sixteen output paths (output ports) in the D stage of the address conversion unit 110, and the light arrives at the second input port from the top among the sixteen input ports of the port conversion unit 120 A port number of the input port is assumed to be 0001.

In the address conversion unit 110, since the paths of the light are switched due to input of light to the MZI optical switch, the light passes through only one location of the address conversion unit 110.

The method of mounting the MZI optical switch used in this example is not limited to any specific method. For example, as the MZI optical switch, an MZI optical switch that operates by using a thermal effect may be used, an MZI optical switch that operates by injecting a carrier may be used, or an MZI optical switch of another type may be used.

Next, the port conversion unit 120 including the shuffle circuit 121 and the bit decomposition circuit 122 will be described in detail.

In the shuffle circuit 121, an input port and an output port are connected, and the input port and the output port are connected such that light propagates from an input port with a port number corresponding to information bits (4 bits) to an output port with a port number corresponding to code bits (3 bits). Propagation of light from an input port with a port number corresponding to the information bits (4 bits) to an output port with a port number corresponding to the code bits (3 bits) corresponds to performing computation of generating the code bits (3 bits) from the information bits (4 bits).

That is, if a 3-bit value (see Fig. 2) representing a bit position of each bit of the information bits (4 bits) is determined, code bits corresponding to information bits (4 bits) can be computed. Therefore, the code bits corresponding to the information bits can be computed by wiring ports with corresponding port numbers.

In general, a value representing each bit position is often determined in a memory, and thus code bits for information bits can be computed according to the method in which an input port and an output port are connected in advance as in the present example.

For example, by connecting the input port with the port number corresponding to the information bits (1001) and the output port with the port number corresponding to the code bits (100), light input from the input port corresponding to the information bits (1001) arrives at the output port with the port number 100. Therefore, the port number corresponding to the code bits can be obtained.

The bit decomposition circuit 122 decomposes the output (port number) of the shuffle circuit 121 into bit values. Specifically, for each bit of the output (3-bit port number) from the shuffle circuit 121, the bit decomposition circuit 122 causes light to propagate to an output port corresponding to the value (0 or 1). The bit decomposition circuit 122 may be realized by a waveguide, an optical fiber, or the like so that such light propagation is performed.

For example, in a case where the output of the shuffle circuit 121 is 000, that is, when light is output from an output port with the port number 000 in the shuffle circuit 121, light is input from an input port corresponding to the port number 000 in the bit decomposition circuit 122, and the light arrives at the port position of (y₂, y₁, y₀) = (0, 0, 0) (y₀ is the least significant bit). Therefore, the output result is bit values (0, 0, 0). This output result is converted into an optical signal, input to an optical transmission line, and transmitted to a receiver.

Similarly, in a case where the output of the shuffle circuit 121 is 101, since the light arrives at (y₂, y₁, y₀) = (1, 0, 1), bit values (1, 0, 1) are output as a result of reception of the light. Here, the shuffle circuit 121 and the bit decomposition circuit 122 may be combined and mounted in one circuit.

As described above, by using the port conversion unit 120, code bits can be computed without performing photoelectric conversion after a bit signal is temporarily converted into an address.

### <Example 1-1-2: example of using Ψ gate for address conversion>

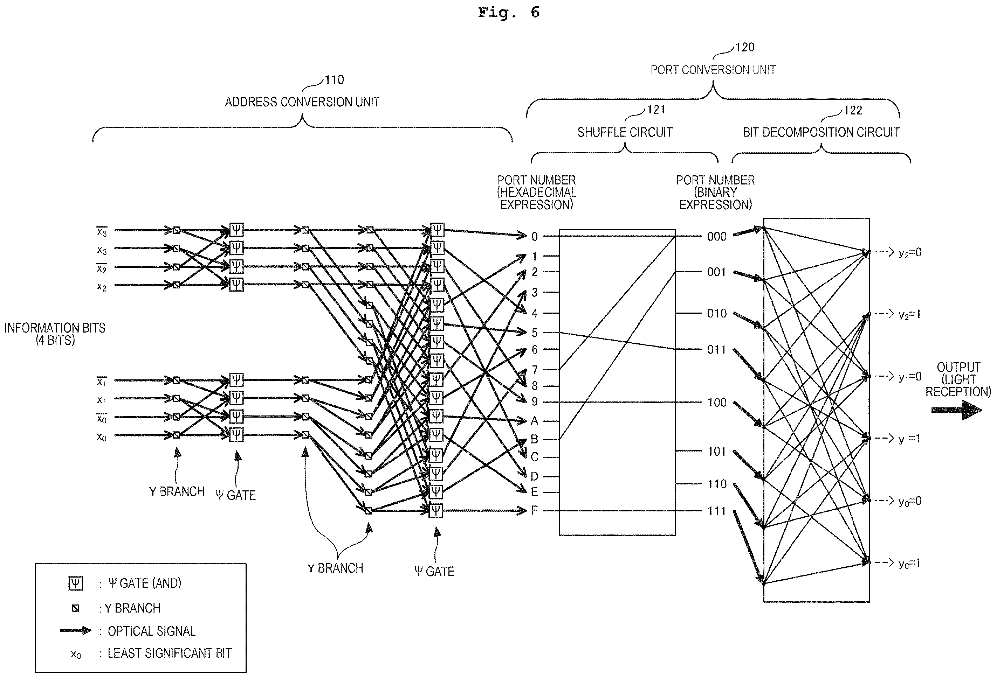

Fig. 6 illustrates a configuration example of an optical computing apparatus 100 in Example 1-1-2. An address conversion unit 110 of the optical computing apparatus 100 illustrated in Fig. 6 has a configuration in which a plurality of Y branches and a plurality of Ψ gates are connected as illustrated. A port conversion unit 120 is the same as that described in Example 1-1-1. The "branch" may be referred to as a "branch element".

The Y branch in the address conversion unit 110 divides an optical signal into two, and the Ψ gate receives a two-input optical signal and bias light (auxiliary light) as inputs, and functions as an AND gate for the two-input optical signal.

The Ψ gate is a logic gate that can realize a representative logic gate operation with a single gate (three inputs and one output) by using light interference and changing an intensity (amplitude) and a phase of bias light by introducing a concept of bias light (Reference Literature: S. Kita, K. Nozaki, K. Tanaka, A. Shinya and M. Notomi, Ultrashort low-loss Ψ gates for linear optical logic on Si photonics platform, Communications Physics, 3, Article number: 33 (2020)).

In Example 1-1-2, information bits (x₃, x₂, x₁, x₀) and their NOTs (⁻x₃, ⁻x₂, ⁻x₁, ⁻x₀) are used as inputs to the address conversion unit 110 (x₀ is the least significant bit). For example, x₀ = 1 is a state in which light is emitted from the light source (light output device 200), and ⁻x₀ = 0 is a state in which light is not emitted from the light source (a state in which there is no light). Note that, in the text of the present specification, symbols added at the top of the characters are added at the upper left of the characters for convenience of description. "⁻x₀" is an example.

As illustrated in Fig. 6, a column in which bits and negations thereof are alternately arranged is used as an input. In the example in Fig. 6, the address conversion unit 110 includes eight Y branches, eight Ψ gates, eight Y gates, sixteen Y gates, and sixteen Ψ gates from the input side, and these are connected as illustrated (connected so that light passes).

In the example in Fig. 6, in a case where the information bits are (x₃, x₂, x₁, x₀) = (0, 0, 0, 0), light is output from the first Ψ gate from the top among the sixteen Ψ gates in the last stage. Therefore, the first Ψ gate is connected to the input port with the number 0 of the shuffle circuit 121.

In a case where the information bits are (x₃, x₂, x₁, x₀) = (0, 0, 0, 1), light is output from the fifth Ψ gate from the top among the sixteen Ψ gates in the last stage. Therefore, the fifth Ψ gate is connected to the input port with the number 1 of the shuffle circuit 121. The same applies to other information bits.

The computation in the port conversion unit 120 is as described above. In this example, an optical signal may be used as an information bit to generate a code bit, without using an electrical signal for input of the information bit.

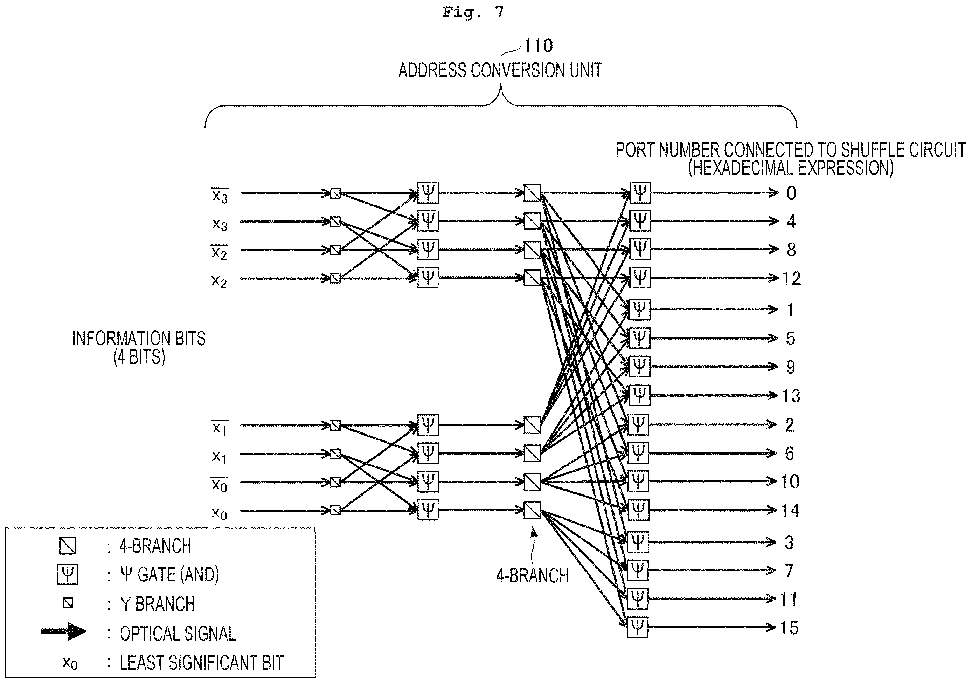

Fig. 7 illustrates another configuration example of the address conversion unit 110. In the example illustrated in Fig. 7, a 4-branch optical gate is used. The 4-branch optical gate equally divides one piece of light into four paths.

As illustrated in Fig. 7, the address conversion unit 110 includes eight Y branches, eight Ψ gates, eight 4-branches, and sixteen Ψ gates from the input side, and these are connected as illustrated in the drawing. With such a configuration, the number of branch gates can be reduced by sixteen compared to the configuration of Fig. 6.

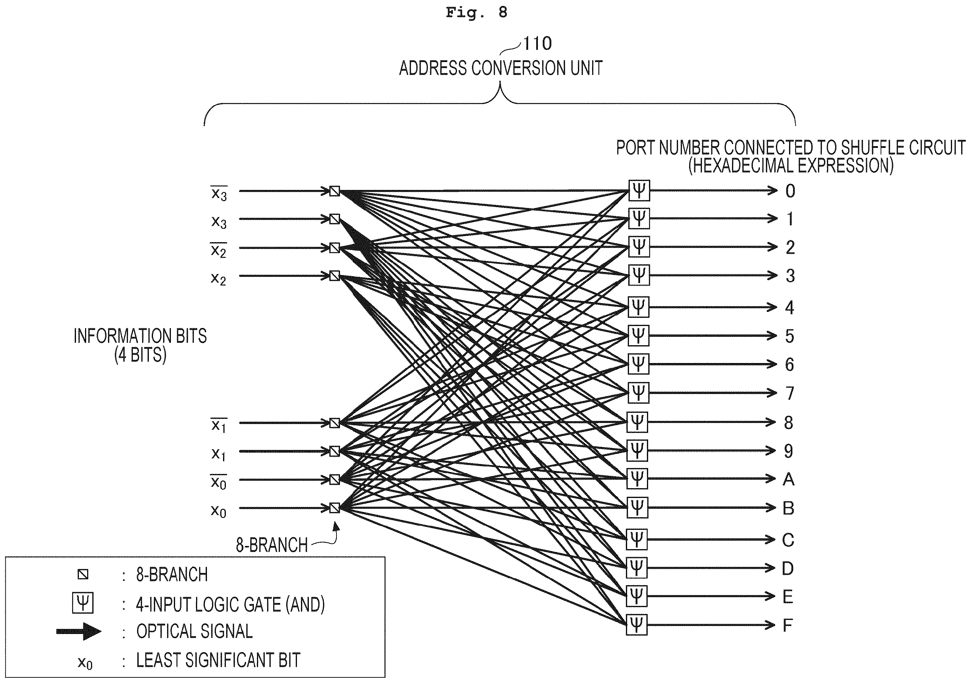

Fig. 8 illustrates a configuration example of the address conversion unit 110 using an 8-branch optical gate and a 4-input AND gate. In the configuration illustrated in Fig. 8, one branch and one 4-input logic gate may be used, and a simple configuration can be realized. The 4-input logic gate may be realized by connecting Ψ gates in two stages, or may be realized by using one logic gate obtained by extending the Ψ gate to five inputs (four inputs and bias light).

### (Example 1-2: error detection)

Next, as Example 1-2, a configuration and an operation of the optical computing apparatus 100 that performs error detection based on code bits generated according to the technique of Example 1-1 will be described.

Error detection may be performed according to the method described in the reference literature "The second basic course of error detection and correction to capture the broad frame of Hamming codes, Embedded Technology Lab., published on September 23, 2020".

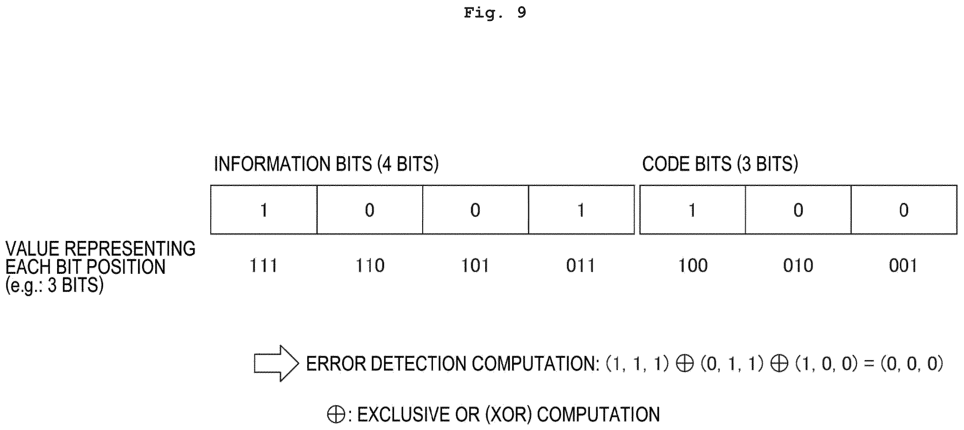

An example of the method is illustrated in Fig. 9. As illustrated in Fig. 9, similarly to the generation of a code bit, each bit is represented by a value (3 bits) representing each predetermined bit position, and exclusive OR computation between 3 bits at a position of "1" in the bit string including the information bits and the code bits is performed. Here, when there is an error, it is assumed that the error is in one location (any one bit in 7 bits). When the result of exclusive OR is 000, this indicates that there is no error, and, when the result is not 000, this indicates the position of the error.

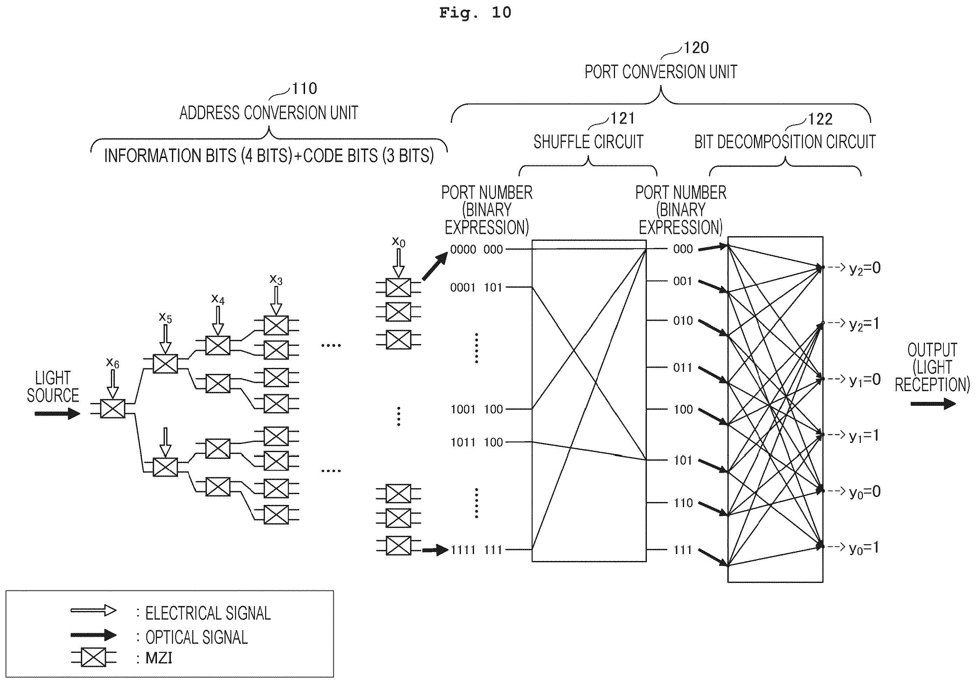

Fig. 10 illustrates a configuration example of an optical computing apparatus 100 that performs error detection. As illustrated in Fig. 10, the optical computing apparatus 100 includes an address conversion unit 110 and a port conversion unit 120. The port conversion unit 120 includes a shuffle circuit 121 and a bit decomposition circuit 122.

The address conversion unit 110 has a configuration, in which a plurality of stages, in which one or a plurality of MZI optical switches are arranged in parallel, are connected in series.

The address conversion unit 110 has a stage corresponding to each bit in a total of 7 bits ((x₆, x₅, x₄, x₃, x₂, x₁, x₀):x₀ is the least significant bit) of information bits and code bits. In each stage, an arm (path) on an output side of each MZI optical switch is connected to an arm on a lower side on an input side of the MZI optical switch in the next stage. However, this is an example. The arm on the output side of the MZI optical switch may be connected to the upper arm on the input side of the next stage MZI optical switch.

In the address conversion unit 110, similarly to the code bit generation, paths of light emitted from the light source (the light output device 200) are switched depending on "information bits and code bits" (7 bits) provided as an electrical signal, and the light arrives at the input of the port conversion unit 120.

For example, in the example in Fig. 10, when the information bits and the code bits are (0, 0, 0, 0, 0, 0, 0), light passes through the arm of each uppermost MZI optical switch, and the light arrives at the port with the port number 0000000 in the port conversion unit 120 (specifically, the shuffle circuit 121). In other words, the port number of the port that the light arrives when the information bits are (0, 0, 0, 0, 0, 0, 0) is set to 0000000. The same applies to other port numbers.

Similarly to the code bit generation, an output result of the address conversion unit 110 is used as an input to the shuffle circuit 121. In this case, assuming that an error may occur only in 1 bit, the number of outputs of the address conversion unit 110 is 2⁷ (= 2⁴ × 2³) {(2⁴ patterns of information bits) × (2³ patterns of "no error + error")}.

That is, since there are 2³ patterns of "no error + error", in order to associate 2⁷ patterns of "information bits and code bits" with 2³ patterns, the shuffle circuit 121 has 2⁷ input ports and 2³ output ports, and the shuffle circuit 121 performs conversion from 2⁷ to 2³. A value of "information bits and code bits" is allocated to an input port as a port number, and each 3-bit value of 2³ patterns is allocated to an output port as a port number.

Since a value representing each bit position in Fig. 9 is fixed, a value (no error or a value of an error position) of the output of the shuffle circuit 121 for a 7-bit value of "information bits and code bits" is uniquely determined. Therefore, a value of the output of the shuffle circuit 121 for each 7-bit value of "information bits and code bits" is computed in advance, and an input port and an output port corresponding to these values (port numbers) are connected. As a result, the port number of the output port from which light input to the input port is output becomes a 3-bit value indicating no error or a value of an error position.

The subsequent configuration and computation process of the bit decomposition circuit 122 are similar to those in the case of generating code bits in Example 1-1-1. As described above, when an error is detected from the information bits and the code bits, photoelectric conversion is unnecessary in the middle of computation, and computation can be performed only by the optical wiring in the port conversion unit 120.

### (Example 2: computing method of encryption scheme)

Next, Example 2 will be described. In Example 2, the optical computing apparatus 100 performs computation in a common key-based encryption scheme. Common key encryption computation mainly includes non-linear computation (S-box) and linear computation. Hereinafter, the non-linear computation will be described as Example 2-1, and the linear computation will be described as Example 2-2. Note that a non-linear computing unit and a linear computing unit of a key scheduling unit can also perform computation by using a method similar to the method described in Example 2.

### (Example 2-1: non-linear computation process)

Here, as an example of the non-linear computation process, computation process of an S-box of the Advanced Encryption Standard (AES) (Example 2-1-1) and computation process of an S-box of PRESENT (Example 2-1-2) will be described.

### <Example 2-1-1: computation process of S-box of AES>

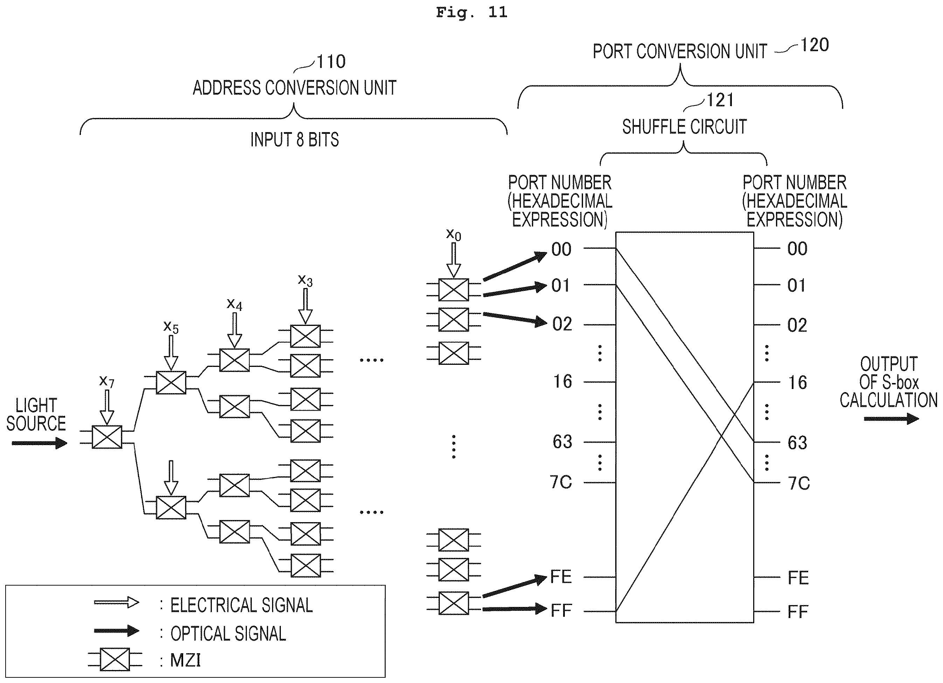

Fig. 11 illustrates a configuration example of an optical computing apparatus 100 in Example 2-1-1. As illustrated in Fig. 11, the optical computing apparatus 100 includes an address conversion unit 110 and a port conversion unit 120. The port conversion unit 120 includes a shuffle circuit 121. The address conversion unit 110 has a configuration, in which a plurality of stages, in which one or a plurality of MZI optical switches are arranged in parallel, are connected in series.

The S-box of AES is table conversion of converting input 8 bits into output 8 bits in a one-to-one correspondence (Reference Literature: Fig. 7 in "Federal Information Processing Standards Publication 197, November 26, 2001 Announcing the ADVANCED ENCRYPTION STANDARD (AES), https://nvlpubs.nist.gov/nistpubs/fips/nist.fips.197.pdf").

The address conversion unit 110 illustrated in Fig. 11 has a stage for each bit in the input bits ((x₇, x₆, x₅, x₄, x₃, x₂, x₁, x₀): x₀ is the least significant bit) provided as an electrical signal, and the electrical signal (ON/OFF) is provided to each MZI optical switch in each stage. In the last stage, the number of paths (ports) that can output light is 2⁸.

In the example illustrated in Fig. 11, the arm (path) on the output side of each MZI optical switch in each stage is connected to the arm on the lower side on the input side of the MZI optical switch in the next stage. However, this is an example. The arm on the output side of the MZI optical switch may be connected to the upper arm on the input side of the next stage MZI optical switch.

In the address conversion unit 110 in Fig. 11, paths of light emitted from the light source (light output device 200) are switched depending on the input bits (8 bits) of the S-box, and the light arrives at one input of the port conversion unit 120. That is, the output of the address conversion unit 110 is determined to be one path by an input 8-bit value of the S-box.

For example, in the example in Fig. 11, when the input bits are (0, 0, 0, 0, 0, 0, 0, 0), light passes through the arm of each uppermost MZI optical switch, and the light arrives at the port with the port number 00000000 in the port conversion unit 120 (specifically, the shuffle circuit 121). In other words, the port number of the port at which the light arrives when the input bits are (0, 0, 0, 0, 0, 0, 0, 0) is set to 0000000. The same applies to other input bits.

The port conversion unit 120 includes a shuffle circuit 121, and uses output light of the address conversion unit 110 as input light. In the shuffle circuit 121, an input port and an output port are connected, and the input port and the output port are connected such that light propagates from an input port with a port number corresponding to input bits (8 bits) to an output port with a port number corresponding to output bits (8 bits). Which input port is connected to which output port is determined based on S-box table conversion of AES.

That is, in the shuffle circuit 121, since the optical wiring is performed in advance on the basis of the S-box table conversion method of AES, input light of the shuffle circuit 121 is converted into a corresponding output port of the S-box. For example, in a case where an input of the shuffle circuit 121 is (00) in hexadecimal, since the input is connected to a position of an output port (63), light arrives at the position of the port number (63), and the output value is (63).

As described above, the S-box computation for 8 bits can be performed. Therefore, for example, S-box computation for 16 bytes can be realized according to a method of repeating the above process sixteen times in time series, using sixteen optical computing apparatuses 100, or performing computation with one optical computing apparatus 100 by using sixteen wavelengths.

As described above, if an input value is subjected to address conversion, the subsequent computation can be performed only by the wiring.

### <Example 2-1-2: computation process of S-box of PRESENT>

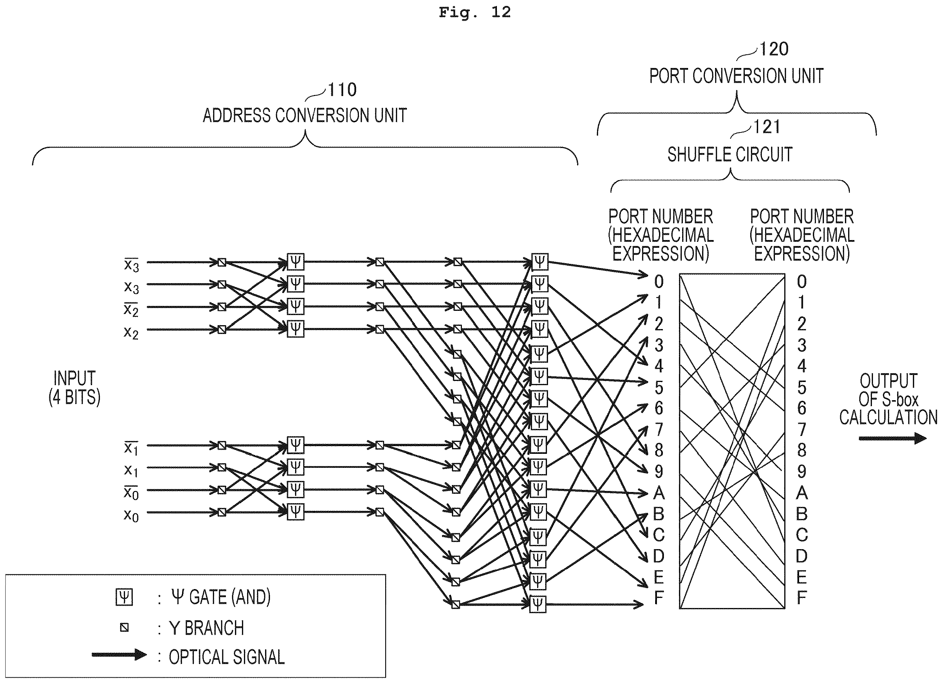

Fig. 12 illustrates a configuration example of an optical computing apparatus 100 in Example 2-1-2. An address conversion unit 110 of the optical computing apparatus 100 illustrated in Fig. 12 has a configuration in which a plurality of Y branches and a plurality of Ψ gates are connected as illustrated. The port conversion unit 120 is similar to that described in Example 2-1-2 (the number of ports is different).

An S-box of the encryption scheme PRESENT (Reference Literature: A. Bogdanov, L. R. Knudsen, G. Leander, C. Paar, A. Poschmann, M. J. B. Robshaw, Y. Seurin, and C. Vikkelsoe, PRESENT: An Ultra-Lightweight Block Cipher, CHES 2007: Cryptographic Hardware and Embedded Systems-CHES 2007 pp 450 to 466) is calculated by the optical computing apparatus 100 illustrated in Fig. 12.

A configuration of the address conversion unit 110 and a connection configuration to the shuffle circuit 121 here are the same as the configuration of the address conversion unit 110 and the connection configuration to the shuffle circuit 121 in Example 1-1-2 illustrated in Fig. 6.

In Example 2-1-2, whether or not to emit light from the light source is determined based on input 4 bits of the S-box and negative values thereof. The light emitted from the light source passes through the Y branch and the Ψ gate and is input to the shuffle circuit 121. In the shuffle circuit 121, since optical wiring is performed in advance based on S-box table conversion of PRESENT, input light of the shuffle circuit 121 is converted into a corresponding output port of the S-box.

For example, in a case where an input of the shuffle circuit is (0) in hexadecimal, since the input is connected to a position of an output port (C), light arrives at the position of the port number (C), and the output value is (C).

Regarding the address conversion unit 110, similarly to Example 1-1-2, the configuration in Fig. 12 may be replaced with a configuration using a 4-branch in Fig. 7, or may be replaced with a configuration using an 8-branch in Fig. 8.

Similarly to Example 2-1-1, for example, computation for 16 bytes can be realized according to a method of repeating the above process sixteen times in time series, using sixteen optical computing apparatuses 100, or performing computation with one optical computing apparatus 100 by using sixteen wavelengths.

As described above, also in the present example, if an input value is subjected to address conversion, the subsequent computation can be performed only by the wiring.

Note that, in Example 2-1 (Example 2-1-1 and Example 2-1-2), in the case of encryption computation, S-box is followed by non-linear computation or linear computation (for example, ShiftRows in the case of AES), and the subsequent computation can also be performed by using a port number, and thus the bit decomposition circuit 122 is omitted. However, the bit decomposition circuit 122 may be inserted. The technique of Example 2-1 can also be applied to S-box computation (table replacement) of other ciphers.

### (Example 2-2: linear computation process)

Next, Example 2-2 will be described. In Example 2-2, a configuration and an operation of the optical computing apparatus 100 that performs computation of MixColumns, which is linear computation of the encryption scheme AES, will be described.

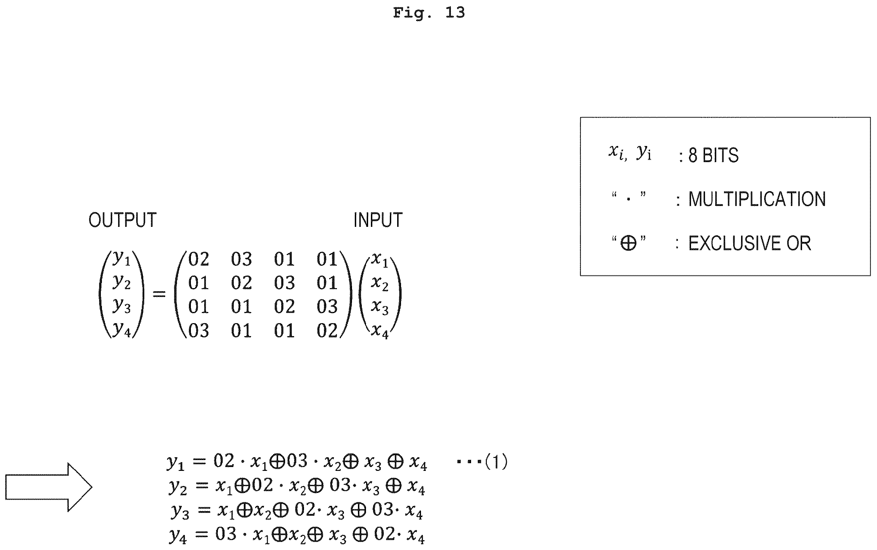

First, the computation of MixColumns will be described with reference to Fig. 13. As illustrated in Fig. 13, the computation of MixColumns includes multiplication in units of 8 bits and exclusive OR, and input/output is 32 bits. Note that each element of the matrix illustrated in Fig. 13 is expressed in hexadecimal. In the text of the following specification, "XOR" is used as a symbol representing an exclusive OR for convenience of description.

Here, the optical computing apparatus 100 for performing 8-bit (y₁) computation illustrated in (1) of Fig. 13 will be described. The same applies to the other 8 bits {y₂, y₃, y₄}. Equation (1) in Fig. 13 may be modified as follows.${y}_{1} = \left\{02\right\} ⋅ {x}_{1} XOR \left\{02\right\} ⋅ {x}_{2} XOR {x}_{2} XOR {x}_{3} XOR {x}_{4}$

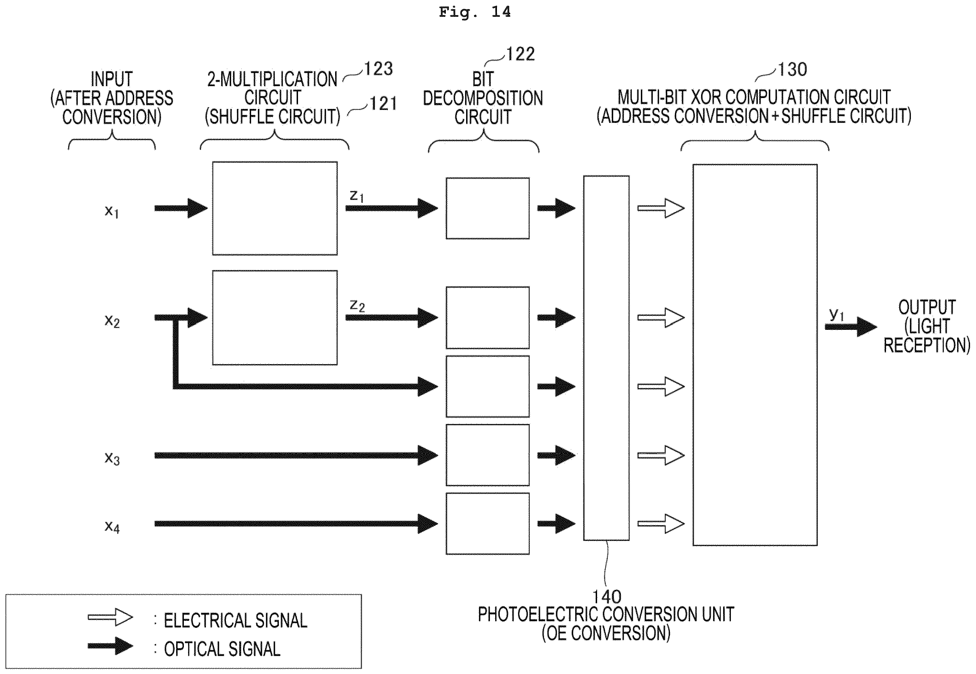

Fig. 14 illustrates a configuration example of an optical computing apparatus 100 that calculates y₁ after modification. Note that the optical computing apparatus 100 includes an address conversion unit 110, a 2-multiplication circuit 123, a bit decomposition circuit 122, a multi-bit XOR computing circuit 130, and a photoelectric conversion unit 140. Note that the address conversion unit 110 has the same configuration as that of the address conversion unit 110 described above, and is not illustrated in Fig. 14. The photoelectric conversion unit 140 may be a device outside the optical computing apparatus 100. Here, when y₁ is computed, implementation may be performed by using a 3-multiplication circuit as in Expression (1) in Fig. 13.

The 2-multiplication circuit 123 corresponds to the shuffle circuit 121. The 2-multiplication circuit 123 and the bit decomposition circuit 122 may be collectively referred to as a port conversion unit 120. The optical computing apparatus 100 may include all of "the address conversion unit 110, the 2-multiplication circuit 123, the bit decomposition circuit 122, and the multi-bit XOR computing circuit 130", or "the address conversion unit 110, the 2-multiplication circuit 123, and the bit decomposition circuit 122" may configure one optical computing apparatus 100 and the "multi-bit XOR computing circuit 130" may configure another optical computing apparatus 100.

In a case where a circuit of the type of performing computation by using only an optical signal is used as the multi-bit XOR computing circuit 130, the photoelectric conversion unit 140 is unnecessary.

In the configuration illustrated in Fig. 14, with respect to the input value {x₁, x₂, x₃, x₄} after the address conversion, {x₁, x₂} is input to the 2-multiplication circuit 123 to obtain {z₁, z₂}. {z₁, z₂, x₂, x₃, x₄} are input to the bit decomposition circuit 122, and obtained results are input to the multi-bit XOR computing circuit 130 via the photoelectric conversion unit 140.

Here, when the bit decomposition for {x₃, x₄} is completed, {x₃, x₄} may be directly input to the bit decomposition circuit 122.

Here, the 2-multiplication circuit 123 in Fig. 14 may be provided for each of x₁ and x₂ (that is, two 2-multiplication circuits 123 are used), or the {z₁, z₂} may be simultaneously calculated by using one 2-multiplication circuit 123 through wavelength multiplexing.

A circuit corresponding to "the bit decomposition circuit 122 and the multi-bit XOR computing circuit 130" may be configured such that computation processes of the "bit decomposition circuit 122 and the multi-bit XOR computing circuit 130" are collectively performed only by wiring. Hereinafter, a configuration example of each circuit will be described.

### <2-multiplication circuit 123>

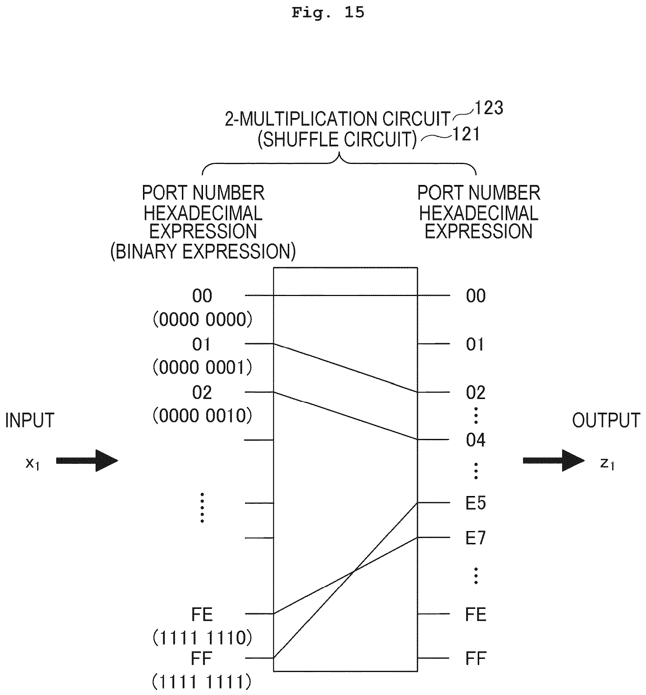

Fig. 15 illustrates a configuration of the 2-multiplication circuit 123 (shuffle circuit 121). In the 2-multiplication computation, left shift is performed, and exclusive OR of the reduced polynomial (1b) is computed when the most significant bit is "1" (Reference Literature: Federal Information Processing Standards Publication 197, November 26, 2001 Announcing the ADVANCED ENCRYPTION STANDARD (AES), https://nvlpubs.nist.gov/nistpubs/fips/nist.fips.197.pdf).

By connecting an input and an output corresponding to a result of 2-multiplication, the 2-multiplication circuit 123 (shuffle circuit 121) illustrated in Fig. 15 can be realized. The {z₁, z₂} can be calculated by the 2-multiplication circuit 123 (the shuffle circuit 121) for the 8-bit values {x₁, x₂}.

### <Bit decomposition circuit 122>

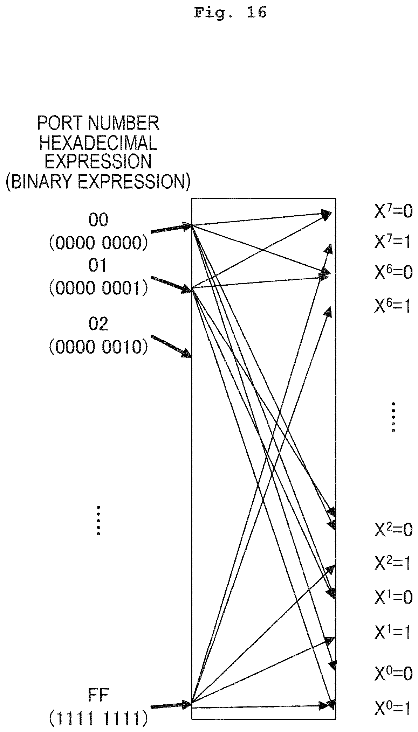

Fig. 16 illustrates a configuration example of the bit decomposition circuit 122. The bit decomposition circuit 122 for 8 bits converts each value of {z₁, z₂, x₂, x₃, x₄} from an address value to bits (x⁷, x⁶, x⁵, x⁴, x³, x², x¹, x⁰) as illustrated in Fig. 16 (x⁰ is the least significant bit value). In the configuration illustrated in Fig. 14, the bit decomposition circuit 122 for each bit of {z₁, z₂, x₂, x₃, x₄} is used, but one circuit may be used through wavelength multiplexing.

### <Multi-bit XOR computing circuit 130>

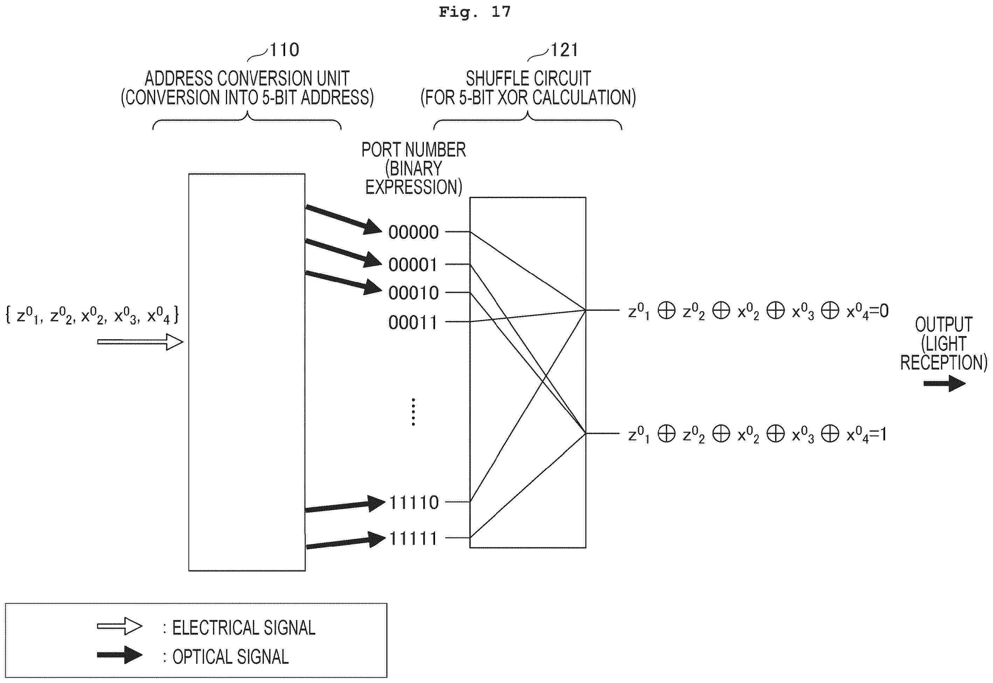

Fig. 17 illustrates a configuration example of the multi-bit XOR computing circuit 130. As illustrated in Fig. 17, the multi-bit XOR computing circuit 130 includes an address conversion unit 110 and a shuffle circuit 121.

The address conversion unit 110 receives a value subjected to bit decomposition by the bit decomposition circuit 122 as an input, and performs address conversion for 5 bits. The shuffle circuit 121 is connected (connection between an input port and an output port) based on a 5-bit XOR computation result, and outputs an XOR computation result to be input 5 bits.

Fig. 17 illustrates a case where 5-bit XOR computation of the least significant bits (represented as {z⁰₁, z⁰₂, x⁰₂, x⁰₃, x⁰₄}) of respective {z₁, z₂, x₂, x₃, x₄} is performed. For computing of the other bits (second to eighth bits), one circuit may be used through wavelength multiplexing, or eight circuits may be used.

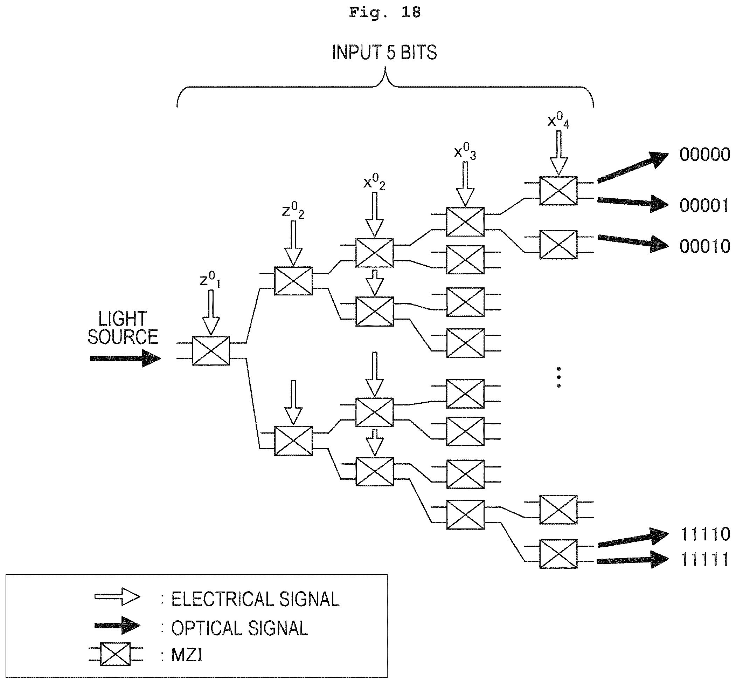

Here, since a circuit (Fig. 18) using an MZI optical switch is used as the address conversion unit 110, the input to the address conversion unit 110 is an electrical signal. Thus, the photoelectric conversion unit 140 is necessary between the bit decomposition circuit 122 and the multi-bit XOR computing circuit 130, but the photoelectric conversion unit 140 is unnecessary in a case of adopting a configuration using a Ψ gate as illustrated in Fig. 12 as the address conversion unit 110.

In Fig. 17, after the address conversion, the light is input to the shuffle circuit 121 for 5-bit XOR computation, and the light arrives at a port where results of the XOR computation (z⁰₁ XOR z⁰₂ XOR x⁰₂ XOR x⁰₃ XOR x⁰₄) indicate "0" or "1", so that a computation result is obtained.

Note that, although the address conversion unit 110 that performs 5-bit address conversion and the shuffle circuit 121 for 5-bit XOR computation are described here, the address conversion unit 110 that performs 6-bit address conversion and the shuffle circuit 121 for 6-bit XOR computation may be used for the next computation of MixColumns such that XOR computation with a key is performed.

As described above, it is possible to perform the multi-bit XOR computation (non-linear computation), which has been difficult to perform by a single optical logic gate, by using only the address conversion and the wiring, and the threshold processing using an electric circuit becomes unnecessary.

According to the technique related to Example 2 described above, it is possible to perform the non-linear computation and the linear computation in the encryption computation by using the address conversion unit 110 and the port conversion unit 120 (the shuffle circuit 121 or the like). In the case of AES, the computation of ShiftRows can also be performed by wiring processing, so that the entire one round of computation of the encryption computing unit can be performed by using the technique according to Example 2.

### (Summary of Examples and Effects)

According to the technique described above, by expressing a plurality of bits of an optical signal with port numbers of light, any various computations can be performed by using optical wiring. As a result, the number of optical logic gates used for computation can be reduced, and the number of times of photoelectric conversion can be reduced. The computation in the case of using the Ψ gate or the MZI is basically computation in units of one bit, but by using the technique described in the present example, multi-bit computation such as 8 bits can be performed at a time as shown in the S-box computation of encryption, and the number of times of computation can be reduced.

That is, in the related art, by using the Ψ gate and the MZI for computation, computation is performed for each bit while regarding an amplitude and a phase as units of bits, and when computation such as encryption computation is complicated, computation in multiple stages is required, and photoelectric conversion and phase conversion are required. In contrast, in the present technique, only by once converting the bit value into the port number, any computation can be performed only by the wiring, and effects such as reducing the number of times of photoelectric conversion and facilitating mounting can be achieved.

While the present embodiments have been described above, the present invention is not limited to such specific embodiments, and various modifications and changes can be made.

### Reference Signs List

- 100: Optical computing apparatus
- 110: Address conversion unit
- 120: Port conversion unit
- 121: Shuffle circuit
- 122: Bit decomposition circuit
- 123: 2-multiplication circuit
- 130: Multi-bit XOR computing circuit
- 140: Photoelectric conversion unit
- 200: Light output device
- 300: Light detection device
- 400: Electrical signal output device

## Claims

1. An optical computing apparatus comprising:
an address conversion unit configured to convert a plurality of bit values into an address value used as an input port number; and
a port conversion unit including a shuffle circuit configured to output light input from an input port with the input port number, from an output port with an output port number corresponding to a result of a computation of the input port number.

2. The optical computing apparatus according to claim 1,
wherein the address conversion unit includes a plurality of Mach-Zehnder interference type optical switches configured to receive, as inputs, the plurality of bit values as electrical signals.

3. The optical computing apparatus according to claim 1,
wherein the address conversion unit includes a plurality of branch elements and a plurality of optical logic gates configured to receive, as inputs, the plurality of bit values as optical signals.

4. The optical computing apparatus according to any one of claims 1 to 3,
wherein the port conversion unit includes a bit decomposition circuit configured to decompose a string of bit values, corresponding to the output port number, into individual bit values.

5. The optical computing apparatus according to any one of claims 1 to 3,
wherein the port conversion unit performs, as the computation, at least one of:
a computation to generate a code bit from an information bit;
a computation to detect an error from the information bit and the code bit;
a non-linear computation in an encryption process; or
a linear computation in the encryption process.

6. An optical computing method executed by an optical computing apparatus, the optical computing method comprising:
an address conversion step of converting a plurality of bit values into an address value used as an input port number; and
a port conversion step of outputting light input from an input port with the input port number, from an output port with an output port number corresponding to a result of a computation of the input port number.

## Patentansprüche

1. Eine optische Rechenvorrichtung, die Folgendes beinhaltet:
eine Adressumwandlungseinheit, die konfiguriert ist, um eine Vielzahl von Bitwerten in einen Adresswert umzuwandeln, der als eine Eingangsportnummer verwendet wird; und
eine Portumwandlungseinheit, die eine Shuffle-Schaltung umfasst, die konfiguriert ist, um Licht, das von einem Eingangsport mit der Eingangsportnummer eingegeben wird, von einem Ausgangsport mit einer Ausgangsportnummer auszugeben, die einem Ergebnis einer Berechnung der Eingangsportnummer entspricht.

2. Optische Rechenvorrichtung gemäß Anspruch 1,
wobei die Adressumwandlungseinheit eine Vielzahl von optischen Schaltern vom Mach-Zehnder-Interferenztyp umfasst, die konfiguriert sind, um die Vielzahl von Bitwerten als elektrische Signale als Eingaben zu empfangen.

3. Optische Rechenvorrichtung gemäß Anspruch 1,
wobei die Adressumwandlungseinheit eine Vielzahl von Verzweigungselementen und eine Vielzahl von optischen Logikgattern umfasst, die konfiguriert sind, um die Vielzahl von Bitwerten als optische Signale als Eingaben zu empfangen.

4. Optische Rechenvorrichtung gemäß einem der Ansprüche 1 bis 3,
wobei die Portumwandlungseinheit eine Bitzerlegungsschaltung umfasst, die konfiguriert ist, um eine Folge von Bitwerten, die der Ausgangsportnummer entspricht, in einzelne Bitwerte zu zerlegen.

5. Optische Rechenvorrichtung gemäß einem der Ansprüche 1 bis 3,
wobei die Portumwandlungseinheit als die Berechnung mindestens eines von Folgendem durchführt:
eine Berechnung, um ein Codebit aus einem Informationsbit zu erzeugen;
eine Berechnung, um einen Fehler aus dem Informationsbit und dem Codebit zu erkennen;
eine nichtlineare Berechnung in einem Verschlüsselungsprozess; oder
eine lineare Berechnung in dem Verschlüsselungsprozess.

6. Ein optisches Rechenverfahren, das von einer optischen Rechenvorrichtung ausgeführt wird, wobei das optische Rechenverfahren Folgendes beinhaltet:
einen Adressumwandlungsschritt zum Umwandeln einer Vielzahl von Bitwerten in einen Adresswert, der als eine Eingangsportnummer verwendet wird; und
einen Portumwandlungsschritt zum Ausgeben von Licht, das von einem Eingangsport mit der Eingangsportnummer eingegeben wird, von einem Ausgangsport mit einer Ausgangsportnummer, die einem Ergebnis einer Berechnung der Eingangsportnummer entspricht.

## Revendications

1. Un appareil de calcul informatique optique comprenant :
une unité de conversion d'adresse configurée pour convertir une pluralité de valeurs de bits en une valeur d'adresse utilisée en tant que numéro de port d'entrée ; et
une unité de conversion de port incluant un circuit de permutation configuré pour sortir une lumière entrée depuis un port d'entrée avec le numéro de port d'entrée, par un port de sortie avec un numéro de port de sortie correspondant à un résultat d'un calcul du numéro de port d'entrée.

2. L'appareil de calcul informatique optique selon la revendication 1,
dans lequel l'unité de conversion d'adresse inclut une pluralité de commutateurs optiques de type à interférence de Mach-Zehnder configurés pour recevoir, en tant qu'entrées, la pluralité de valeurs de bits en tant que signaux électriques.

3. L'appareil de calcul informatique optique selon la revendication 1,
dans lequel l'unité de conversion d'adresse inclut une pluralité d'éléments formant branches et une pluralité de portes logiques optiques configurées pour recevoir, en tant qu'entrées, la pluralité de valeurs de bits en tant que signaux optiques.

4. L'appareil de calcul informatique optique selon l'une quelconque des revendications 1 à 3,
dans lequel l'unité de conversion de port inclut un circuit de décomposition de bits configuré pour décomposer une chaîne de valeurs de bits, correspondant au numéro de port de sortie, en des valeurs de bits individuelles.

5. L'appareil de calcul informatique optique selon l'une quelconque des revendications 1 à 3,
dans lequel l'unité de conversion de port effectue, en tant que calcul, au moins l'une des opérations suivantes :
un calcul afin de générer un bit de code à partir d'un bit d'information ;
un calcul afin de détecter une erreur à partir du bit d'information et du bit de code ;
un calcul non linéaire dans un processus de cryptage ; ou
un calcul linéaire dans le processus de cryptage.

6. Un procédé de calcul informatique optique exécuté par un appareil de calcul informatique optique, le procédé de calcul informatique optique comprenant :
une étape de conversion d'adresse consistant à convertir une pluralité de valeurs de bits en une valeur d'adresse utilisée en tant que numéro de port d'entrée ; et
une étape de conversion de port consistant à sortir une lumière entrée depuis un port d'entrée avec le numéro de port d'entrée, par un port de sortie avec un numéro de port de sortie correspondant à un résultat d'un calcul du numéro de port d'entrée.
